# FASCICULE DE BREVET EUROPEEN

(11) **EP 2 596 729 B1**
(45) Date de publication et mention de la délivrance du brevet: **20.05.2015**
(21) Numéro de dépôt: 12193471.5
(22) Date de dépôt: 20.11.2012
(51) Int. Cl.: A47J 37/12

(54) **Appareil de cuisson comportant un accessoire de filtration pouvant occuper deux positions**
Kochgerät, das ein Filterzubehörteil umfasst, das zwei Positionen einnehmen kann
Cooking appliance comprising a filtering accessory between two positions

(30) Priorité: 22.11.2011 FR 1160661
(43) Date de publication de la demande: 29.05.2013
(73) Titulaire: SEB S.A., 69130 Ecully (FR)
(72) Inventeur: Pinel, Marcel, 29900 Concarneau (FR); Reiner, Guillaume, 38000 Grenoble (FR)
(74) Mandataire: Cémeli, Eric Philippe Laurent

(56) Documents cités:
- EP-A1- 1 488 722
- EP-A1- 2 220 976

## Description

La présente invention concerne le domaine des appareils de cuisson comportant une cuve de cuisson agencée dans un boitier.

La présente invention concerne notamment, mais non exclusivement, les friteuses électriques, ou encore les cuiseurs à pâtes.

Après avoir cuit des aliments dans un bain de cuisson, l'utilisateur peut souhaiter égoutter les aliments, ou encore retirer les résidus d'aliments présents dans le bain de cuisson.

Il est connu du document US 2008 169281 de réaliser un appareil de cuisson comportant une cuve agencée dans un boitier ainsi qu'un accessoire de filtration amovible agencé dans la cuve. L'accessoire de filtration est relié à deux organes de préhension s'étendant de part et d'autre de la cuve et peut occuper une position abaissée dans la cuve et une position relevée. Toutefois le maintien de l'accessoire de filtration en position relevée est obtenu en accrochant l'accessoire de filtration à un crochet monté à l'intérieur de la cuve.

Un autre appareil est connu du document EP 1488722 A1.

Un objet de la présente invention est de proposer un appareil de cuisson comportant un accessoire de filtration susceptible d'occuper une position abaissée dans une cuve et une position relevée, qui présente une construction simple.

Un autre objet de la présente invention est de proposer un appareil de cuisson comportant un accessoire de filtration susceptible d'occuper une position abaissée dans une cuve et une position relevée, qui présente une utilisation aisée.

Ces objets sont atteints avec un appareil de cuisson, notamment une friteuse électrique, comportant un boitier logeant une cuve prévue pour recevoir un bain de cuisson, et un accessoire de filtration amovible susceptible d'occuper une position abaissée dans une cuve et une position relevée, l'accessoire de filtration comportant des organes d'appui, du fait que les organes d'appui reposent sur le boîtier à l'extérieur de la cuve lorsque l'accessoire de filtration occupe la position relevée, et que le boîtier comporte dés conformations latérales extérieures logeant les organes d'appui lorsque l'accessoire de filtration occupe la position abaissée. Ces dispositions permettent de réaliser un appareil dans lequel la cuve est dépourvue de moyens d'accrochage. La position relevée de l'accessoire de filtration peut être obtenue en posant simplement l'accessoire de filtration sur le boîtier.

Avantageusement, les conformations latérales extérieures guident l'accessoire de filtration déplacé de la position abaissée vers la position relevée. Cette disposition favorise une remontée progressive de l'accessoire de filtration, propice à la filtration du bain de cuisson.

Selon une forme de réalisation avantageuse, l'accessoire de filtration comporte deux organes de préhension s'étendant de part et d'autre de la cuve lorsque l'accessoire de filtration occupe la position abaissée. Cette disposition permet de relever l'accessoire de filtration en utilisant les deux mains, ce qui facilite l'utilisation d'un accessoire de filtration présentant des ouvertures de petite dimension.

Avantageusement alors, chacun des organes de préhension est issu de l'un des organes d'appui. Cette disposition permet de simplifier la construction de l'appareil.

Selon une forme de réalisation avantageuse, le ou les organes de préhension sont proéminents par rapport à la paroi latérale du boîtier lorsque l'accessoire de filtration occupe la position abaissée. Cette disposition permet de faciliter la manipulation de l'accessoire de filtration.

Plus particulièrement, l'accessoire de filtration comporte au moins un dispositif de filtration s'étendant à l'intérieur de la cuve lorsque l'accessoire de filtration occupe la position abaissée. Le dispositif de filtration est alors immergé dans le bain de cuisson.

Avantageusement alors, le dispositif de filtration s'étend à l'intérieur de la cuve lorsque l'accessoire de filtration occupe la position relevée. Cette disposition permet de faciliter l'égouttage du dispositif de filtration au dessus du bain de cuisson.

Avantageusement encore, le dispositif de filtration peut être tourné à l'intérieur de la cuve lorsque l'accessoire de filtration est soulevé au dessus de la position relevée. Cette disposition permet de limiter les risques de retombées de liquide de cuisson à l'extérieur de la cuve.

Selon une forme de réalisation avantageuse, l'appareil comporte un panier de cuisson amovible disposé dans la cuve au dessus du dispositif de filtration lorsque l'accessoire de filtration occupe la position abaissée.

Avantageusement encore, le dispositif de filtration est relié aux organes d'appui par des languettes. Cette disposition permet de faciliter la réalisation de la cuve.

Selon une forme de réalisation avantageuse, intéressante notamment lors de la réalisation de fritures, l'appareil comporte un couvercle prévu pour fermer la cuve.

Avantageusement alors, le couvercle porte un joint prévu pour prendre appui sur un bord supérieur de la cuve lorsque le couvercle ferme la cuve. Cette disposition permet notamment de mieux contrôler les émissions de vapeur de cuisson.

Avantageusement encore, la cuve est ronde. Cette disposition permet d'autoriser une rotation du dispositif de filtration à l'intérieur de la cuve en limitant l'espace entre le dispositif de filtration et la paroi latérale de la cuve.

Selon une forme de réalisation avantageuse, les organes d'appui et/ou les organes de préhension sont issus de pièces réalisées en matière plastique. Si désiré une même pièce peut former l'un des organes d'appui et l'un des organes de préhension.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un appareil de cuisson selon l'invention,
- la figure 2 est une vue en perspective d'un accessoire de filtration de l'appareil illustré sur la figure 1,
- la figure 3 est une vue en perspective de l'appareil illustré sur la figure 1 dans laquelle l'accessoire de filtration illustré sur la figure 2 est disposé en position basse dans la cuve de l'appareil,
- la figure 4 est une vue en perspective de l'appareil illustré sur la figure 1 dans laquelle l'accessoire de filtration illustré sur la figure 2 est disposé en position haute dans la cuve de l'appareil.

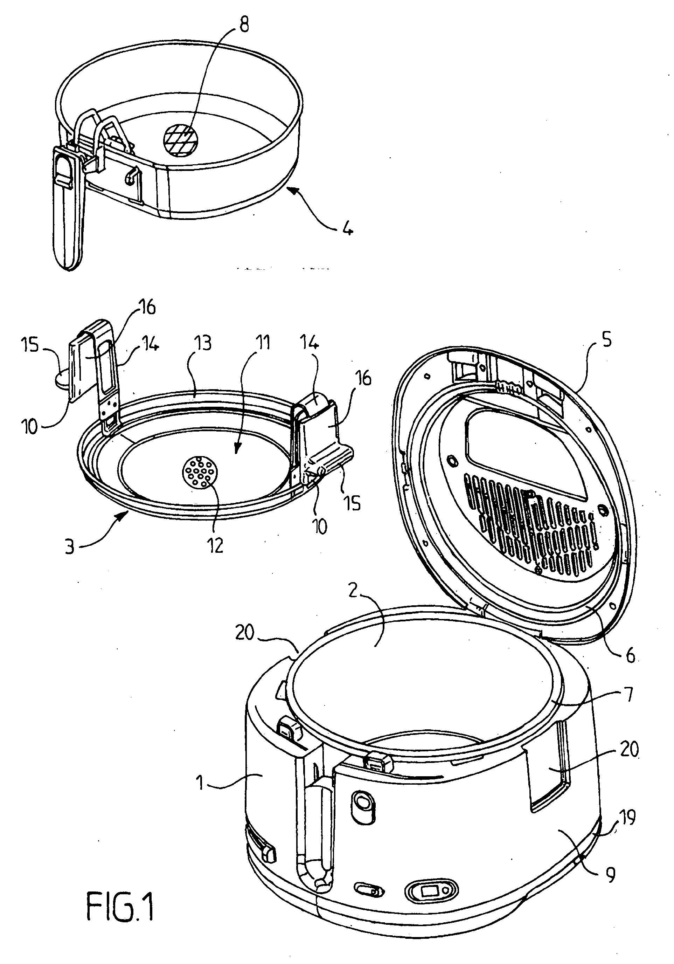

L'appareil de cuisson illustré sur la figure 1 est une friteuse électrique comportant un boitier 1 logeant une cuve 2 prévue pour recevoir un bain de cuisson, un accessoire de filtration 3 amovible ainsi qu'un panier de cuisson 4 amovible.

L'appareil de cuisson comporte des moyens de chauffe (non représentés sur les figures) prévus pour chauffer le bain de cuisson. Les moyens de chauffe peuvent notamment comprendre un élément électrique chauffant immergé dans le bain de cuisson, ou un élément électrique chauffant en contact thermique avec la cuve 2.

L'appareil de cuisson comporte un couvercle 5 prévu pour fermer la cuve 2. Le couvercle 5 est monté pivotant sur le boîtier 1. Le couvercle 5 porte un joint 6 prévu pour prendre appui sur un bord supérieur 7 de la cuve 2 lorsque le couvercle 5 ferme la cuve 2.

L'accessoire de filtration 3 comporte des organes d'appui 10. Les organes d'appui 10 sont reliés à un dispositif de filtration 11. Plus particulièrement dans l'exemple de réalisation illustré sur les figures, l'accessoire de filtration 3 comporte deux organes d'appui 10 agencés de manière opposée par rapport au dispositif de filtration 11.

Le dispositif de filtration 11 forme un tamis filtrant prévu pour recueillir les résidus de cuisson. Le dispositif de filtration 11 présente un fond 12 entouré par une paroi latérale supérieure 13. Le dispositif de filtration 11 est relié aux organes d'appui 10 par des languettes 14.

L'accessoire de filtration 3 comporte des organes de préhension 15. Les organes de préhension 15 sont reliés au dispositif de filtration 11. Plus particulièrement dans l'exemple de réalisation illustré sur les figures, les organes de préhension 15 sont agencés de manière opposée par rapport au dispositif de filtration 11. Chacun des organes de préhension 15 est issu de l'un des organes d'appui 10. Selon une forme de réalisation préférée, les organes d'appui 10 et les organes de préhension 15 sont issus de pièces 16 réalisées en matière plastique. Les pièces 16 peuvent notamment être surmoulées sur les languettes 14.

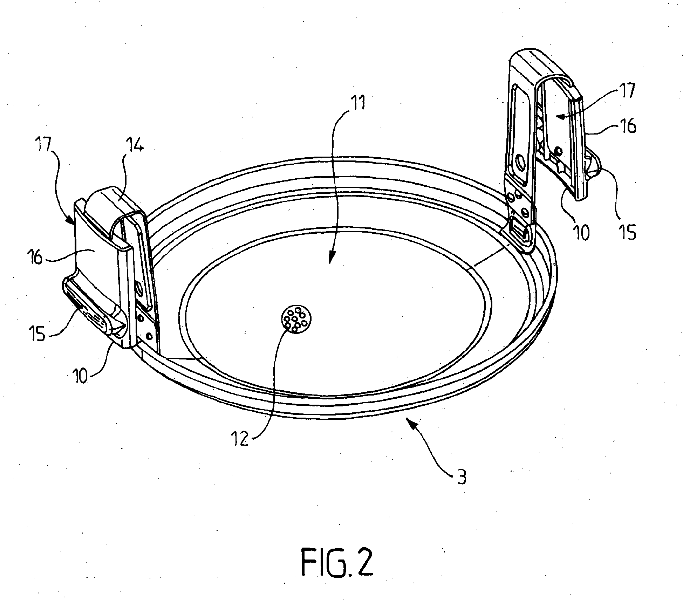

Le dispositif de filtration 11 est par exemple réalisé en tôle perforée, tel que représenté sur la figure 2. Le dispositif de filtration 11 présente des ouvertures de filtration avantageusement inférieures à 2 mm, et de préférence comprises entre 0,8 et 1,5 mm.

Le dispositif de filtration 11 s'étend sous le panier de cuisson 4. Le panier de cuisson 4 présente des ouvertures 8 de taille supérieure aux ouvertures de filtration du dispositif de filtration 11. Les résidus de cuisson tombant du panier de cuisson 4 peuvent ainsi être recueillis dans le dispositif de filtration 11.

L'accessoire de filtration 3 amovible est susceptible d'occuper une position abaissée dans la cuve 2 et une position relevée.

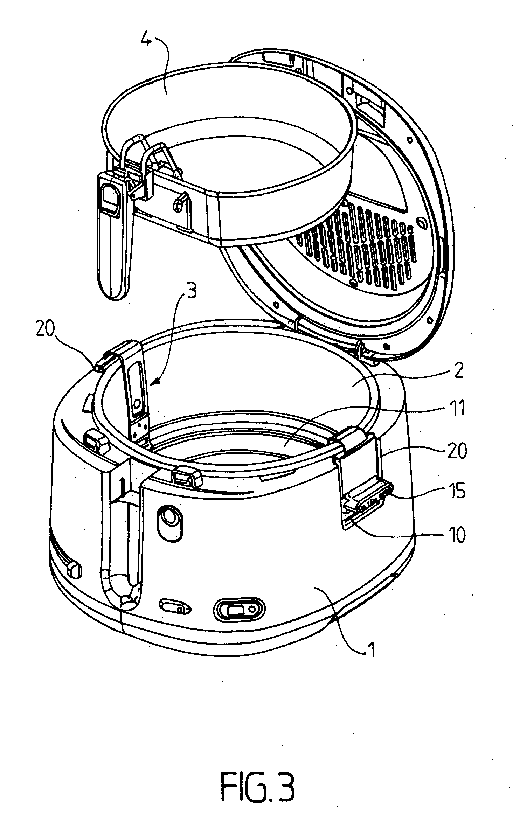

Tel que montré sur la figure 3, le boîtier 1 comporte des conformations latérales extérieures 20 logeant les organes d'appui 10 lorsque l'accessoire de filtration 3 occupe la position abaissée. Les organes de préhension 15 sont proéminents par rapport à la paroi latérale du boîtier 1 lorsque l'accessoire de filtration 3 occupe la position abaissée. Les organes de préhension 15 s'étendent de part et d'autre de la cuve 2 lorsque l'accessoire de filtration 3 occupe la position abaissée.

Le dispositif de filtration 11 s'étend à l'intérieur de la cuve 2 lorsque l'accessoire de filtration 3 occupe la position abaissée.

Si désiré les languettes 14 peuvent reposer sur le bord supérieur 7 de la cuve 2. L'utilisation de languettes 14 pour relier le dispositif de filtration 11 aux organes d'appui 10 permet de limiter la surépaisseur par rapport au bord supérieur 7 de la cuve 2. Cette disposition permet de faciliter l'étanchéité entre le joint 6 et la cuve 2 lorsque le couvercle 5 est rabattu sur le boîtier 1.

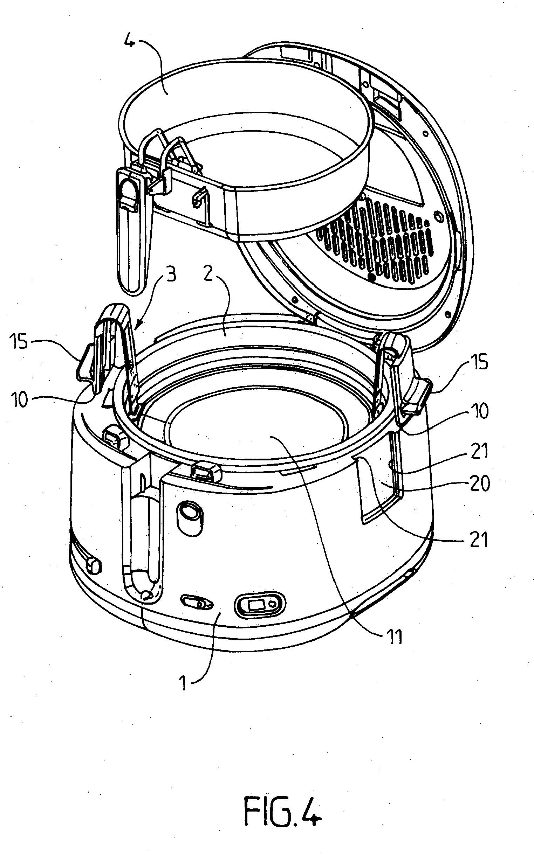

Tel que montré sur la figure 4, les organes d'appui 10 reposent sur le boîtier 1 à l'extérieur de la cuve 2 lorsque l'accessoire de filtration 3 occupe la position relevée. Le dispositif de filtration 11 s'étend à l'intérieur de la cuve 2 lorsque l'accessoire de filtration 3 occupe la position relevée.

Le dispositif de filtration 11 peut être tourné à l'intérieur de la cuve 2 lorsque l'accessoire de filtration 3 est soulevé au dessus de la position relevée, pour dégager les organes d'appui 10 des conformations latérales extérieures 20. La cuve 2 est ronde et le dispositif de filtration 11 présente une configuration circulaire, ce qui permet de limiter l'espace entre le dispositif de filtration 11 et la cuve 2 pour améliorer l'efficacité de la filtration.

Plus particulièrement, les conformations latérales extérieures 20 du boîtier 1 présentent au moins un organe de guidage latéral 21 prévu pour guider une face latérale 17 des pièces 16 lorsque l'accessoire de filtration 3 est soulevé vers la position relevée. Ainsi les conformations latérales extérieures 20 guident l'accessoire de filtration 3 déplacé de la position abaissée vers la position relevée.

Les conformations latérales extérieures 20 du boîtier 1 sont avantageusement formées dans une paroi latérale 9 du boîtier 1 réalisée en matière plastique. La paroi latérale 9 entoure la cuve 2. Tel que représenté sur la figure 1, la paroi latérale 9 est assemblée avec un fond 19. Les conformations latérales extérieures 20 s'étendent à distance de la cuve 2.

Le fonctionnement de la présente invention est le suivant.

Avant de réaliser une cuisson d'aliments, l'utilisateur place l'accessoire de filtration 3 en position abaissée dans la cuve 2 en logeant les organes d'appui 10 dans les conformations latérales extérieures 20 du boîtier 1. L'accessoire de filtration 3 est au moins partiellement immergé dans le bain de cuisson disposé dans la cuve 2.

L'utilisateur peut placer des aliments dans le panier de cuisson 4 disposé dans la cuve 2 au dessus du dispositif de filtration 11 lorsque l'accessoire de filtration 3 occupe la position abaissée, pour cuire ou frire les aliments dans le bain de cuisson.

Lorsque la cuisson est terminée, l'utilisateur retire le panier de cuisson 4 puis peut filtrer le bain de cuisson en relevant l'accessoire de filtration 3 à l'aide des organes de préhension 15. L'utilisateur peut tourner l'accessoire de filtration 3 après avoir dégagé les organes d'appui 10 des conformations latérales extérieures 20 du boîtier 1 et poser les organes d'appui 10 sur le boîtier 1. Le dispositif de filtration 11 peut alors égoutter dans la cuve 2.

L'accessoire de filtration 3 présente ainsi une utilisation particulièrement aisée et permet de réaliser un appareil de cuisson présentant une construction simple.

A titre de variante, l'appareil de cuisson ne comporte pas nécessairement un panier de cuisson distinct de l'accessoire de cuisson. L'accessoire de filtration 3 peut notamment former un support de cuisson et/ou un panier de cuisson.

A titre de variante, l'appareil de cuisson n'est pas nécessairement une friteuse électrique. L'invention concerne également les appareils de cuisson comportant un bain de cuisson tel que les cuiseurs à pâtes. Le dispositif de filtration 11 est alors prévu pour contenir un plat ou une portion de pâtes.

A titre de variante, l'accessoire de filtration 3 peut comporter au moins un dispositif de filtration 11.

A titre de variante, l'accessoire de filtration 3 ne comporte pas nécessairement deux organes de préhension 15 opposés. L'accessoire de filtration 3 peut comporter au moins un organe de préhension et/ou être associé à au moins un organe de préhension amovible. Si désiré, les organes d'appui 10 et/ou le ou les organes de préhension 15 peuvent être issus de pièces réalisées en matière plastique.

A titre de variante, les organes d'appui 10 et le ou les organes de préhension 15 peuvent être issus de pièces distinctes.

A titre de variante, les organes de préhension 15 ne sont pas nécessairement réliés au dispositif de filtration 11. Un ou plusieurs dispositifs de filtration peuvent notamment être portés par un support relié aux organes de préhension. Ainsi le ou les dispositifs de filtration est/sont amovible(s) par rapport aux organes de préhension.

La présente invention n'est nullement limitée à l'exemple de réalisation décrit et à ses variantes, mais englobe de nombreuses modifications dans le cadre des revendications.

## Revendications

1. Appareil de cuisson, notamment friteuse électrique, comportant un boitier (1) logeant une cuve (2) prévue pour recevoir un bain de cuisson, et un accessoire de filtration (3) amovible susceptible d'occuper une position abaissée dans la cuve (2) et une position relevée, l'accessoire de filtration (3) comportant des organes d'appui (10), **caractérisé en ce que** les organes d'appui (10) reposent sur le boîtier (1) à l'extérieur de la cuve (2) lorsque l'accessoire de filtration (3) occupe la position relevée, et **en ce que** le boîtier (1) comporte des conformations latérales extérieures (20) logeant les organes d'appui (10) lorsque l'accessoire de filtration (3) occupe la position abaissée.

2. Appareil de cuisson selon la revendication 1, **caractérisé en ce que** les conformations latérales extérieures (20) guident l'accessoire de filtration (3) déplacé de la position abaissée vers la position relevée.

3. Appareil de cuisson selon l'une des revendications 1 ou 2, **caractérisé en ce que** l'accessoire de filtration (3) comporte deux organes de préhension (15) s'étendant de part et d'autre de la cuve (2) lorsque l'accessoire de filtration (3) occupe la position abaissée.

4. Appareil de cuisson selon la revendication 3, **caractérisé en ce que** chacun des organes de préhension (15) est issu de l'un des organes d'appui (10).

5. Appareil de cuisson selon l'une des revendications 3 ou 4, **caractérisé en ce que** le ou les organes de préhension (15) sont proéminents par rapport à la paroi latérale du boîtier (1) lorsque l'accessoire de filtration (3) occupe la position abaissée.

6. Appareil de cuisson selon l'une des revendications 1 à 5, **caractérisé en ce que** l'accessoire de filtration (3) comporte au moins un dispositif de filtration (11) s'étendant à l'intérieur de la cuve (2) lorsque l'accessoire de filtration (3) occupe la position abaissée.

7. Appareil de cuisson selon la revendication 6, **caractérisé en ce que** le dispositif de filtration (11) s'étend à l'intérieur de la cuve (2) lorsque l'accessoire de filtration (3) occupe la position relevée.

8. Appareil de cuisson selon l'une des revendications 6 ou 7, **caractérisé en ce que** le dispositif de filtration (11) peut être tourné à l'intérieur de la cuve lorsque l'accessoire de filtration (3) est soulevé au dessus de la position relevée.

9. Appareil de cuisson selon l'une des revendications 6 à 8, **caractérisé en ce qu'il** comporte un panier de cuisson (4) amovible disposé dans la cuve (2) au dessus du dispositif de filtration (11) lorsque l'accessoire de filtration (3) occupe la position abaissée.

10. Appareil de cuisson selon l'une des revendications 6 à 9, **caractérisé en ce que** le dispositif de filtration (11) est relié aux organes d'appui (10) par des languettes (14).

11. Appareil de cuisson selon l'une des revendications 1 à 10, **caractérisé en ce qu'il** comporte un couvercle (5) prévu pour fermer la cuve (2).

12. Appareil de cuisson selon la revendication 11, **caractérisé en ce que** le couvercle (5) porte un joint (6) prévu pour prendre appui sur un bord supérieur (7) de la cuve (2) lorsque le couvercle (5) ferme la cuve (2).

13. Appareil de cuisson selon l'une des revendications 1 à 12, **caractérisé en ce que** la cuve (2) est ronde.

14. Appareil de cuisson selon l'une des revendications 1 à 13, **caractérisé en ce que** les organes d'appui (10) et/ou les organes de préhension (15) sont issus de pièces (16) réalisées en matière plastique.

## Patentansprüche

1. Kochgerät, insbesondere elektrische Fritteuse, mit einem Gehäuse (1), in dem ein Behälter (2) untergebracht ist, der für die Aufnahme eines Garbades vorgesehen ist, und einem abnehmbaren Filterzubehör (3), das eine abgesenkte Position in dem Behälter (2) und eine angehobene Position einnehmen kann, wobei das Filterzubehör (3) Auflageelemente (10) umfasst, **dadurch gekennzeichnet, dass** die Auflageelemente (10) außerhalb des Behälters (2) auf dem Gehäuse (1) aufliegen, wenn das Filterzubehör (3) die angehobene Position einnimmt, und dass das Gehäuse (1) außenliegende seitliche Strukturen (20) aufweist, die die Auflageelemente (10) aufnehmen, wenn das Filterzubehör (3) die abgesenkte Position einnimmt.

2. Kochgerät nach Anspruch 1, **dadurch gekennzeichnet, dass** die außenliegenden seitlichen Strukturen (20) das von der abgesenkten Position in die angehobene Position bewegte Filterzubehör (3) führen.

3. Kochgerät nach einem der Ansprüche 1 oder 2, **dadurch gekennzeichnet, dass** das Filterzubehör (3) zwei Griffelemente (15) umfasst, die sich beiderseits des Behälters (2) erstrecken, wenn das Filterzubehör (3) die abgesenkte Position einnimmt.

4. Kochgerät nach Anspruch 3, **dadurch gekennzeichnet, dass** jedes der Griffelemente (15) aus einem der Auflageelemente (10) hervorgeht.

5. Kochgerät nach einem der Ansprüche 3 oder 4, **dadurch gekennzeichnet, dass** das oder die Griffelemente (15) in Bezug auf die seitliche Wand des Gehäuses (1) vorspringend sind, wenn das Filterzubehör (3) die abgesenkte Position einnimmt.

6. Kochgerät nach einem der Ansprüche 1 bis 5, **dadurch gekennzeichnet, dass** das Filterzubehör (3) zumindest eine Filtervorrichtung (11) umfasst, die sich im Innern des Behälters (2) erstreckt, wenn das Filterzubehör (3) die abgesenkte Position einnimmt.

7. Kochgerät nach Anspruch 6, **dadurch gekennzeichnet, dass** sich die Filtervorrichtung (11) in das Innere des Behälters (2) erstreckt, wenn das Filterzubehör (3) die angehobene Position einnimmt.

8. Kochgerät nach Anspruch 6 oder 7, **dadurch gekennzeichnet, dass** sich die Filtervorrichtung (11) im Innern des Behälters drehen lässt, wenn das Filterzubehör (3) über die angehobene Position hinaus gehoben wird.

9. Kochgerät nach einem der Ansprüche 6 bis 8, **dadurch gekennzeichnet, dass** es einen abnehmbaren Kocheinsatz (4) umfasst, der sich in dem Behälter (2) über der Filtervorrichtung (11) befindet, wenn das Filterzubehör (3) die abgesenkte Position einnimmt.

10. Kochgerät nach einem der Ansprüche 6 bis 9, **dadurch gekennzeichnet, dass** die Filtervorrichtung (11) durch Laschen (14) mit den Auflageelementen (10) verbunden ist.

11. Kochgerät nach einem der Ansprüche 1 bis 10, **dadurch gekennzeichnet, dass** es einen Deckel (5) zum Verschließen des Behälters (2) umfasst.

12. Kochgerät nach Anspruch 11, **dadurch gekennzeichnet, dass** der Deckel (5) eine Dichtung (6) zur Abstützung auf einem oberen Rand (7) des Behälters (2) trägt, wenn der Deckel (5) den Behälter (2) verschließt.

13. Kochgerät nach einem der Ansprüche 1 bis 12, **dadurch gekennzeichnet, dass** der Behälter (2) rund ist.

14. Kochgerät nach einem der Ansprüche 1 bis 13, **dadurch gekennzeichnet, dass** die Auflageelemente (10) und/oder die Griffelemente (15) aus Teilen (16) hervorgehen, die aus Kunststoff hergestellt sind.

## Claims

1. Cooking appliance, notably an electric fat fryer, comprising a casing (1) housing a vat (2) designed for receiving a cooking bath, and a removable filtration accessory (3) capable of occupying a position in which it is lowered into the vat (2) and a raised position, the filtration accessory (3) comprising bearing members (10), **characterised in that** the bearing members (10) rest on the casing (1) outside the vat (2) when the filtration accessory (3) is in the raised position, and **in that** the casing (1) comprises external lateral shapings (20) which house the bearing members (10) when the filtration accessory (3) is in the lowered position.

2. Cooking appliance according to claim 1, **characterised in that** the external lateral shapings (20) guide the filtration accessory (3) as it is moved from the lowered position to the raised position.

3. Cooking appliance according to claim 1 or 2, **characterised in that** the filtration accessory (3) comprises two gripping members (15) extending from both sides of the vat (2) when the filtration accessory (3) is in the lowered position.

4. Cooking appliance according to claim 3, **characterised in that** each gripping member (15) originates from one of the bearing members (10).

5. Cooking appliance according to claim 3 or 4, **characterised in that** the one or more gripping members (15) project relative to the lateral wall of the casing (1) when the filtration accessory (3) is in the lowered position.

6. Cooking appliance according to one of claims 1 to 5, **characterised in that** the filtration accessory (3) comprises at least one filtration device (11) extending inside the vat (2) when the filtration accessory (3) is in the lowered position.

7. Cooking appliance according to claim 6, **characterised in that** the filtration device (11) extends inside the vat (2) when the filtration accessory (3) is in the raised position.

8. Cooking appliance according to claim 6 or 7, **characterised in that** the filtration device (11) can be turned inside the vat when the filtration accessory (3) is lifted above the raised position.

9. Cooking appliance according to one of claims 6 to 8, **characterised in that** it comprises a removable cooking basket (4) positioned in the vat (2) above the filtration device (11) when the filtration accessory (3) is in the lowered position.

10. Cooking appliance according to one of claims 6 to 9, **characterised in that** the filtration device (11) is connected to the bearing members (10) by tabs (14).

11. Cooking appliance according to one of claims 1 to 10, **characterised in that** it comprises a lid (5) designed for closing the vat (2).

12. Cooking appliance according to claim 11, **characterised in that** the lid (5) bears a gasket (6) designed to rest on a top edge (7) of the vat (2) when the lid (5) closes the vat (2).

13. Cooking appliance according to one of claims 1 to 12, **characterised in that** the vat (2) is round.

14. Cooking appliance according to one of claims 1 to 13, **characterised in that** the bearing members (10) and/or the gripping members (15) originate from plastic parts (16).
